# NEW EUROPEAN PATENT SPECIFICATION

(11) **EP 3 079 513 B2**
(45) Date of publication and mention of the opposition decision: **05.11.2025**
(45) Mention of the grant of the patent: 30.10.2019
(21) Application number: 13899233.4
(22) Date of filing: 13.12.2013
(51) Int. Cl.: B29C 33/42, B29C 41/14, B29C 41/40, A41D 19/00, A41D 19/04, B29L 31/48, A41D 19/015

(54) **AMBIDEXTROUS FISH SCALE-TEXTURED GLOVE**
BEIDHÄNDIGER FISCHSCHUPPENTEXTURIERTER HANDSCHUH
GANT AMBIDEXTRE À TEXTURE EN ÉCAILLES DE POISSON

(43) Date of publication of application: 19.10.2016
(60) Divisional application: 19200496.8
(73) Proprietor: Covco (H.K.) Limited, Wanchai, Hong Kong (HK)
(72) Inventor: FURLONG, John, Joseph, Bangkok (TH)
(74) Representative: Carpmaels & Ransford LLP
(86) International application number: PCT/US2013/074919
(87) International publication number: WO 2015/088549

(56) References cited:
- WO-A1-03/057444
- KR-A- 20120 041 281
- US-A- 4 329 312
- US-A- 5 421 033
- US-A- 6 081 928
- US-A1- 2006 041 991
- US-A1- 2011 191 936
- US-A1- 2012 036 612

## Description

### FIELD OF THE INVENTION

The described invention relates to an ambidextrous working glove having fish scale-textured inner and outer surfaces and methods of making same.

### BACKGROUND

Typical uses of working gloves include food processing, chemical handling, pesticide spraying, and the like. The thickness of working gloves should not hamper tactile sensation. However, the working gloves should be strong enough to resist rupture. It is desirable in working gloves to provide roughened or textured inner and outer surfaces, since working gloves with smooth surfaces make gripping items difficult for a wearer. A textured outer surface enables a wearer to adequately grip items that may be slippery. In addition, the inner surface of the glove is in close contact with the wearer's skin and docs not absorb the wearer's perspiration. A textured inner surface may reduce the likelihood of slippage of the wearer's hand inside the working glove during use that may be caused by perspiration, wherein the textured inner surface may enable the perspiration to flow away from any pressured surface without "skating" of the glove over the surface of the wearer's hand.

Current attempts to form a glove with textured inner and outer surfaces have employed methods whereby a texture is imparted to the inner surface by using a textured form, and either treating the film forming the glove in a manner that erodes the film thereby creating texture on the outer surface, or by spraying particles onto the outer surface of the glove. Such methods are unsatisfactory, due to various factors, such as, for example, lack of dexterity, difficulty in donning, non-uniform thickness of the glove causing the glove to rupture during use.

Current working gloves frequently utilize donning powders, such as, for example, cornstarch or talc, to enable a wearer to don the glove more easily. However, donning powders can contaminate wounds, irritate skin, leave a residue on equipment and clothing, and mechanically interfere with some procedures that a user may perform while wearing the working glove.

Previous attempts to ameliorate the slippage of the glove caused by the wearer's perspiration have proved unsuccessful. For example, cotton flock linings frequently are only able to absorb small amount of perspiration before losing their effectiveness.

Additionally, present methods to impart a contact-reducing texture to the inner surface of the glove to ameliorate the effects of the wearer's perspiration and/or aid donning frequently reduce mechanical performance of the glove, leading to rupture of the glove.

Examples of prior proposals for ambidextrous working gloves are disclosed in US 2006/041991 A1 (Kim) and in US 2012/0036612 A1 (Hull).

*Kim* discloses an ambidextrous glove having a textured outer gripping surface and states that the glove provides the same tactile sensitivity offered by conventional gloves.

*Hull* discloses an ambidextrous working glove which has a gripping pattern on its external surface. The inner surface is textured by the provision of rayon or cotton flocking deposited on the inside surface of the glove. This flocking may interfere with the user's dexterity and provides a feel or sensitivity which is quite different from that provided by a conventional working glove in which, for example, the inside surface may be plain.

Accordingly, there remains a need for a working glove with textured inner and outer surfaces, with improved dexterity, ease of donning and a reduced frequency of failure during use.

### SUMMARY

The present invention provides an ambidextrous working glove as defined in claim 12.

The present invention also provides a method for making an ambidextrous working glove as defined in claim 1.

In one embodiment, the ambidextrous working glove of the present invention complies with FFDCA requirements for food handling.

In one embodiment, the ambidextrous working glove of the present invention complies with European Standard EN374-3.

In one embodiment, the ambidextrous working glove of the present invention complies with European Standard EN388:2003.

In one embodiment, the ambidextrous working glove of the present invention complies with European Standard EN374-2.

In one embodiment, the ambidextrous working glove of the present invention complies with European Standard EN420:2003.

In one embodiment, the ambidextrous working glove of the present invention complies with European Standard EN1186:2002.

In one embodiment, the ambidextrous working glove of the present invention complies with European Standard EN421:2010.

### BRIEF DESCRIPTION OF THE DRAWINGS

Figure 1 depicts one method by which one embodiment of the ambidextrous working glove of the present invention may be formed.
Figure 2 shows an at least one former that is utilized to form one embodiment of the ambidextrous working glove of the present invention.
Figure 3 shows the dimensions of the fish scale pattern etched or engraved into an at least one former used to make one embodiment of the ambidextrous working glove of the present invention.
Figure 4 shows a perspective view of an at least one former that is utilized to form one embodiment of the ambidextrous working glove of the present invention.
Figure 5 shows a front view of an at least one former that is utilized to form one embodiment of the ambidextrous working glove of the present invention.
Figure 6 shows a rear view of an at least one former that is utilized to form one embodiment of the ambidextrous working glove of the present invention.
Figure 7 panel a) shows a left view of an at least one former that is utilized to form one embodiment of the ambidextrous working glove of the present invention. Panel b) shows a right view of an at least one former that is utilized to form one embodiment of the ambidextrous working glove of the present invention.
Figure 8 panel a) shows a top view of an at least one former that is utilized to form one embodiment of the ambidextrous working glove of the present invention. Panel b) shows a bottom view of an at least one former that is utilized to form one embodiment of the ambidextrous working glove of the present invention.
Figure 9 shows one embodiment of the ambidextrous working glove of the present invention on an at least one former prior to stripping from the former.
Figure 10 panel (a) shows the palm of one embodiment of the ambidextrous working glove of the present invention. Panel (b) shows the back of one embodiment of the wearable glove of the present invention.
Figure 11 shows the inner surface of one embodiment of the ambidextrous working glove of the present invention.
Figure 12 shows a perspective view of one embodiment of the ambidextrous working glove of the present invention.
Figure 13 shows a front view of one embodiment of the ambidextrous working glove of the present invention.
Figure 14 shows a rear view of one embodiment of the ambidextrous working glove of the present invention.

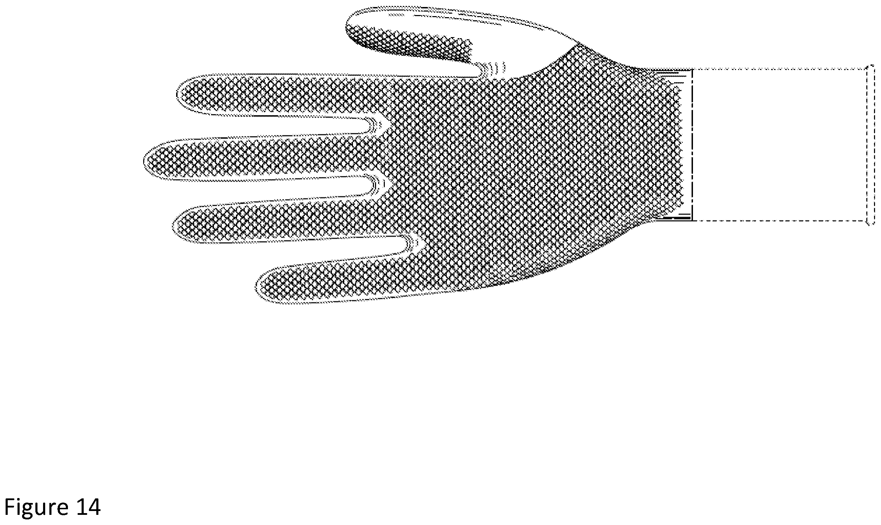

Figure 14 panel a) shows a left view of one embodiment of the ambidextrous working glove of the present invention. Panel b) shows a right view of one embodiment of the ambidextrous working glove of the present invention.

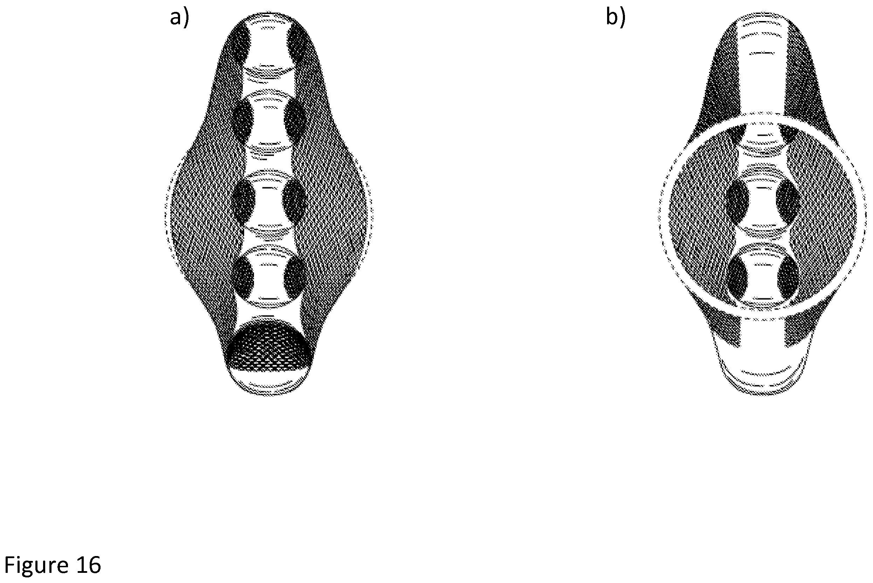

Figure 16 panel a) shows a top view of one embodiment of the ambidextrous working glove of the present invention. Panel b) shows a bottom view of one embodiment of the ambidextrous working glove of the present invention.

### DETAILED DESCRIPTION

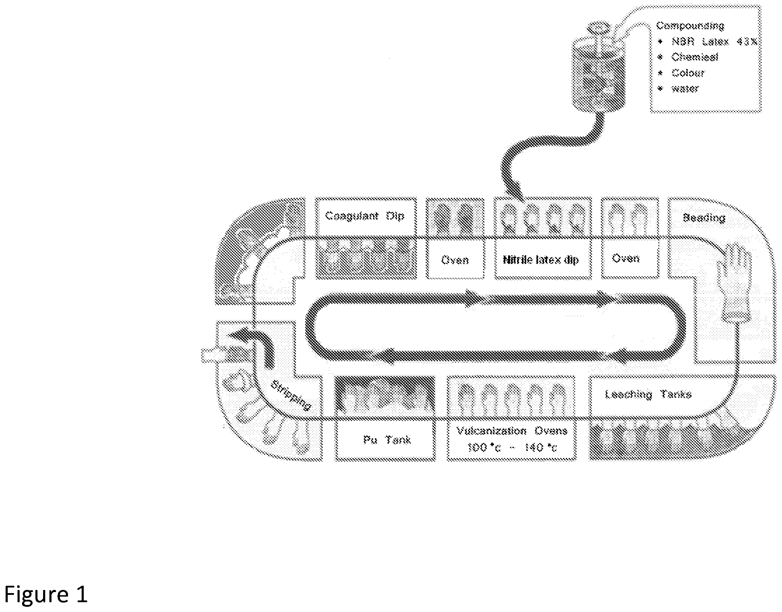

In one embodiment, the ambidextrous working glove of the present invention is formed on at least one former, which may be suitably mounted on a desired carrier, such as a movable board or a conveyor chain, The at least one former is carried sequentially through a series of steps as illustrated schematically in Figure 1. In forming the ambidextrous working glove of the present invention, the at least one former is dipped into a bath of suitable coagulant material. The coagulant may control the thickness of the film of the first polymer solution that forms on the at least one former, that forms the ambidextrous working glove of the present invention. Alternatively, the coagulant may assist in the later removal of the ambidextrous working glove of the present invention from the at least one former. Alternatively, the coagulant solution may control the thickness of the film of the first polymer solution and may assist in the later removal of the ambidextrous working glove of the present invention from the at least one former. The at least one former is dipped into a slip dip bath of a first polymer solution to form a film on the at least one former. The film coated at least one former is passed through an oven to solidify the film. The solid film coated at least one former is then washed or leached to remove any contaminants, then the washed solid film coated at least one former is then dipped into a second polymer solution that coats the solid film coated at least one former. A bead is formed on the coated film on the at least one former, and the finished glove is then stripped from the at least one former.

In certain embodiments, the coated film may be treated before the finished glove is stripped from the at least one former. The treatment may be vulcanization. Alternatively, the coated film may be treated with at least one additional chemical. Examples of the at least one additional chemical may include antimicrobial agents, such as the antimicrobial coating disclosed in EP 1965719 A2.

Referring to Figure 1, an ambidextrous working glove having fish scale-textured inner and outer surfaces is made via a method comprising the steps of:
a. providing a first polymer solution;
b. providing a coagulant solution;
c. providing a second polymer solution;
d. providing at least one former having a fish scale-textured surface and dipping the at least one former into the coagulant solution to coat the at least one former with coagulant;
e. removing the at least one former from the coagulant solution and drying the coagulant coating on the at least one former;
f. dipping the at least one former coated with coagulant into the first polymer solution, and allowing the first polymer solution to coat the at least one former;
g. removing the at least one former from the first polymer solution and drying the polymer coating on the at least one former, forming a film;
h. washing the film on the at least one former, and dipping the film coated at least one former into a second polymer solution, and allowing the second polymer solution to coat the film; and
i. stripping the glove from the at least one former.

In one embodiment, the finished gloves may then be further processed. Such further processing may include, for example, packaging, sterilization, and the like.

In one embodiment, prior to removal of the finished glove from the at least one former, the finished glove may be treated with at least one additional chemical. Examples of the at least one additional chemical may include antimicrobial agents, such as the antimicrobial coating disclosed in EP 1965719 A2. The inner surface of the finished glove may be treated with at least one additional chemical. Alternatively, the outer surface of the finished glove may be treated with at least one additional chemical. Alternatively, both the inner and outer surface of the finished glove may be treated with at least one additional chemical.

The first polymer solution may be any polymer suitable for forming a working glove that complies with at least one requirement selected from the group consisting of FFDCA requirements for food handling, European Standard EN374-3, European Standard EN388:2003, European Standard EN374-2, European Standard EN420:2003, European Standard EN1186:2002, and European Standard EN421:2010.

The first polymer solution may be any polymer suitable for forming a working glove that complies with European Standard EN374-3 for chemical resistance. Alternatively, the first polymer solution may be any polymer suitable for forming a working glove that complies with FFDCA requirements for food handling. Alternatively, the first polymer solution may be any polymer suitable for forming a working glove that complies with European Standard EN388:2003 for protective gloves against mechanical risks. Alternatively, the first polymer solution may be any polymer suitable for forming a working glove that complies with European Standard EN374-2. Alternatively, the first polymer solution may be any polymer suitable for forming a working glove that complies with European Standard EN420:2003. Alternatively, the first polymer solution may be any polymer suitable for forming a working glove that complies with European Standard EN1186:2002. Alternatively, the first polymer solution may be any polymer suitable for forming a working glove that complies with European Standard EN421:2010.

In one embodiment, the first polymer solution is latex. In an alternate embodiment, the first polymer solution is a synthetic rubber copolymer solution. The synthetic rubber copolymer may be a solution comprising a copolymer of acetonitrile and butadiene.

In one embodiment, the first polymer solution is a solution comprising a mixture of nitrile latex, sulphur, zinc oxide, titanium dioxide, zinc dibutyldithiocarbamate (ZDBC), ammonia, vultamol and potassium hydroxide.

In one embodiment, the solution the first polymer solution is a solution comprising a mixture of nitrile latex, sulphur, zinc oxide, titanium dioxide, ZDBC, ammonia, vultamol and potassium hydroxide is formed according to the mixture set forth in Table 1 below.

**Table 1**

| **Chemical** | **Parts per hundred of rubber** |
|---|---|
| Nitrile latex (43% v/v, initial concentration) | 100 |
| Sulphur powder | 1.34 |
| Zinc oxide | 1.74 |
| Titanium dioxide | 1.88 |
| ZDBC | 1.05 |
| Ammonia (12% v/v initial concentration) | 3.60 |
| Vultamol | 0.23 |
| Potassium hydroxide | 0.87 |

In one embodiment, the first polymer solution is the solution comprising the copolymer of acetonitrile and butadiene disclosed in WO2007105122 A1.

In one embodiment, the first polymer solution is the solution comprising the copolymer of acetonitrile and butadiene disclosed in EP1435374 A2.

In one embodiment, the first polymer solution is the solution comprising the copolymer of acetonitrile and butadiene disclosed in EP 1260549 A1.

In one embodiment, the first polymer solution is the solution comprising the copolymer of acetonitrile and butadiene disclosed in EP0925329 B1.

The first polymer solution may contain additional additives, such as, for example, colorants, preservatives, fragrances, and the like.

The coagulant solution may be a calcium nitrate solution. In one embodiment the coagulant solution is a 35% w/v solution of calcium nitrate. Alternatively, the coagulant solution may be the coagulant solution disclosed in EP1638423 B1.

The at least one former has a fish scale-textured surface that imparts a fish scale-texture to the ambidextrous working glove of the present invention. The fish scale-textured surface of the at least one former imparts a fish scale-texture to the inner and outer surfaces of the ambidextrous working glove of the present invention. One of ordinary skill in the art can readily appreciate that not all surface textures on the at least one former are capable of imparting a surface texture to both the inner and outer surface of an ambidextrous working glove of the present invention.

In one embodiment, the measured thickness of the glove in a textured area is greater than the measured thickness of the glove measured in a non-textured area. The thickness of the glove may be measured by any suitable method, such as, for example, via the use of a micrometer.

In one embodiment, the textured surface measured thickness of the glove in a textured area is 10% greater than the measured thickness of the glove measured in a non-textured area. In an alternate embodiment, the measured thickness of the glove in a textured area is 15% greater than the measured thickness of the glove measured in a non-textured area. In an alternate embodiment, the measured thickness of the glove in a textured area is 20% greater than the measured thickness of the glove measured in a non-textured area. In an alternate embodiment, the measured thickness of the glove in a textured area is 25% greater than the measured thickness of the glove measured in a non-textured area. In an alternate embodiment, the measured thickness of the glove in a textured area is 30% greater than the measured thickness of the glove measured in a non-textured area. In an alternate embodiment, the measured thickness of the glove in a textured area is 35% greater than the measured thickness of the glove measured in a non-textured area. In an alternate embodiment, the measured thickness of the glove in a textured area is 40% greater than the measured thickness of the glove measured in a non-textured area. In an alternate embodiment, the measured thickness of the glove in a textured area is 45% greater than the measured thickness of the glove measured in a non-textured area. In an alternate embodiment, the measured thickness of the glove in a textured area is 50% greater than the measured thickness of the glove measured in a non-textured area.

The textured inner and outer surfaces of the ambidextrous working glove of the present invention is formed by the direct transfer function of the surface texture of the at least one former. A textured former surface for the ambidextrous working glove of the present invention has been found to be provided by at least one form that has a fish-scale textured finish. Transfer texturing from such a surface provides a highly desirable textured interior and outer surfaces. The textured interior surface provides a highly desirable hand-engaging surface and the textured exterior surface provides highly desirable grip.

One of ordinary skill in the art can readily appreciate that the ability of the at least one former to impart or transfer a texture to both the inner and outer surfaces of the ambidextrous working glove of the present invention can vary in response to a variety of factors including, but not limited to the polymer forming the film of the working glove, the thickness of the working glove, and the shape and/or depth of the texture of the at least one former.

In one embodiment, 100% of the surface of the former is textured to impart or transfer a texture to both the inner and outer surfaces of the ambidextrous working glove of the present invention. In an alternate embodiment, less than 100% of the surface of the former is textured to impart or transfer a texture to both the inner and outer surfaces of the ambidextrous working glove of the present invention. In an alternate embodiment, 90% of the surface of the former is textured to impart or transfer a texture to both the inner and outer surfaces of the ambidextrous working glove of the present invention. In an alternate embodiment, 80% of the surface of the former is textured to impart or transfer a texture to both the inner and outer surfaces of the ambidextrous working glove of the present invention. In an alternate embodiment, 70% of the surface of the former is textured to impart or transfer a texture to both the inner and outer surfaces of the ambidextrous working glove of the present invention. In an alternate embodiment, 60% of the surface of the former is textured to impart or transfer a texture to both the inner and outer surfaces of the ambidextrous working glove of the present invention. In an alternate embodiment, 50% of the surface of the former is textured to impart or transfer a texture to both the inner and outer surfaces of the ambidextrous working glove of the present invention. In an alternate embodiment, 40% of the surface of the former is textured to impart or transfer a texture to both the inner and outer surfaces of the ambidextrous working glove of the present invention. In an alternate embodiment, 30% of the surface of the former is textured to impart or transfer a texture to both the inner and outer surfaces of the ambidextrous working glove of the present invention. In an alternate embodiment, 20% of the surface of the former is textured to impart or transfer a texture to both the inner and outer surfaces of the ambidextrous working glove of the present invention. In an alternate embodiment, 10% of the surface of the former is textured to impart or transfer a texture to both the inner and outer surfaces of the ambidextrous working glove of the present invention.

The surface of the at least one former is textured on the front and back of the region of the at least one former that forms the fingers of the ambidextrous working glove of the present invention. The surface of the at least one former is textured on the region of the at least one former that forms the palm of the ambidextrous working glove of the present invention. The surface of the at least one former is textured on the region of the at least one former that forms the back of the ambidextrous working glove of the present invention. In one embodiment, the surface of the at least one former is textured on the region of the at least one former that forms the region of the thumb that faces the palm of the ambidextrous working glove of the present invention.

In one embodiment, the texture transferred or imparted to the inner and outer surfaces of the ambidextrous working glove of the present invention does not weaken the glove. In one embodiment, the texture transferred or imparted to the inner and outer surfaces of the ambidextrous working glove of the present invention does not affect removal of the glove from the at least one former.

In one embodiment, an individual fish-scale in the textured surface of the at least one former is etched into the at least one former at a depth of about 0.4 mm, and is about 2.3 mm wide and 3.4 mm high.

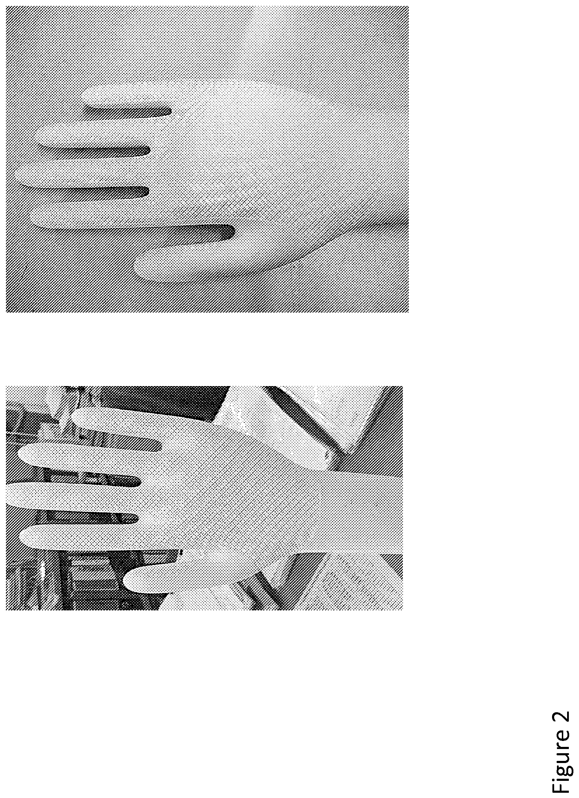

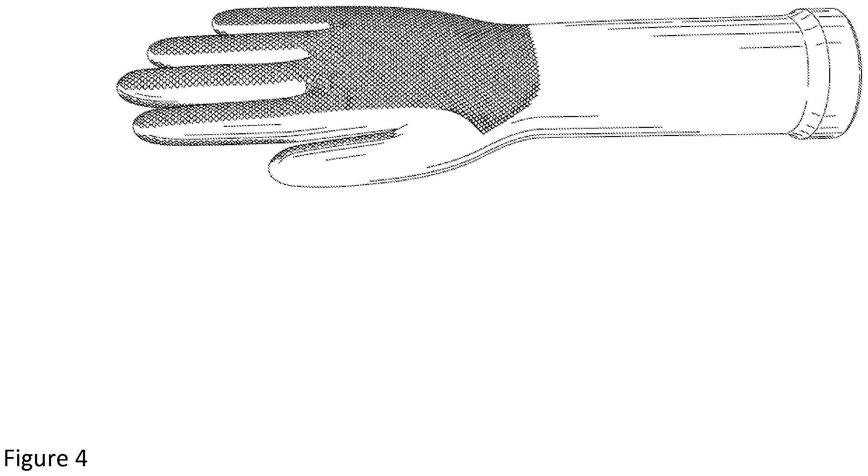

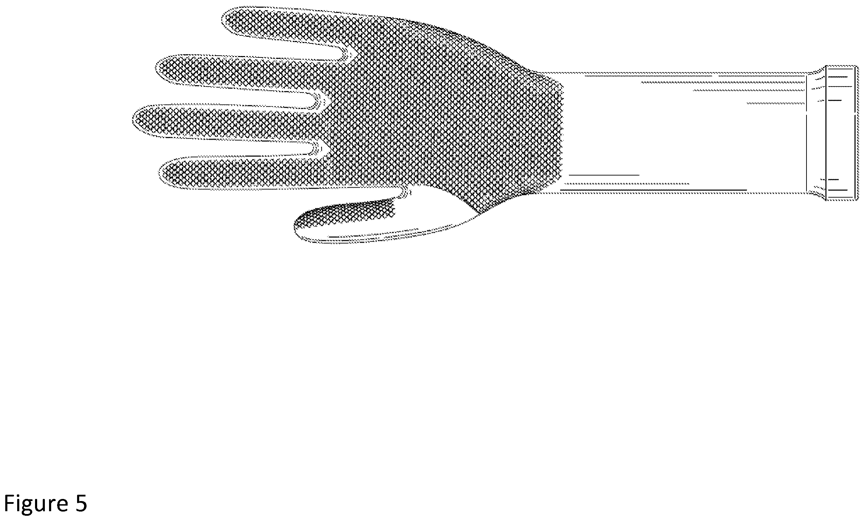

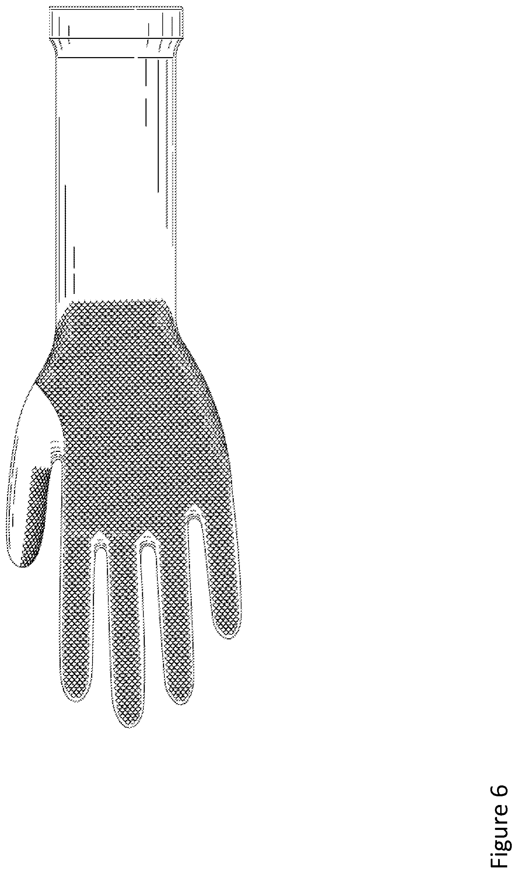

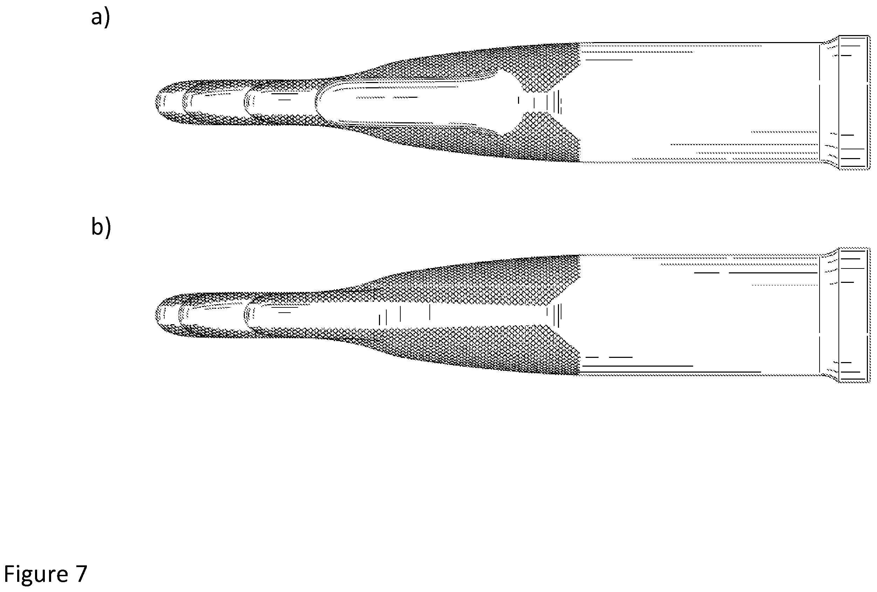

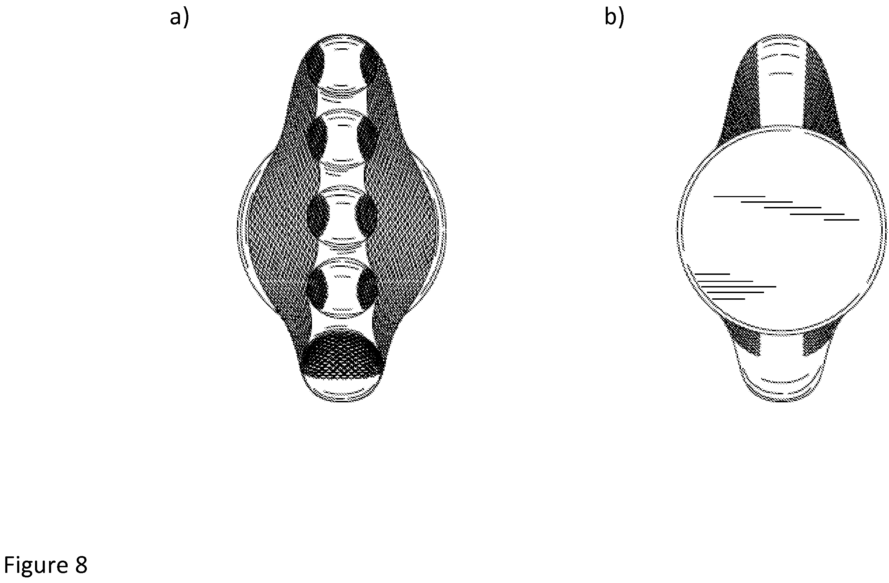

Figures 2 to 8 show various views of an at least one former that is used to form one embodiment of the ambidextrous working glove of the present invention, showing how the individual fish scales are etched into the at least one former.

The size of the at least one former determines the size of the ambidextrous working glove of the present invention. For example, a "small" former would be used to form a "small" glove, and so on.

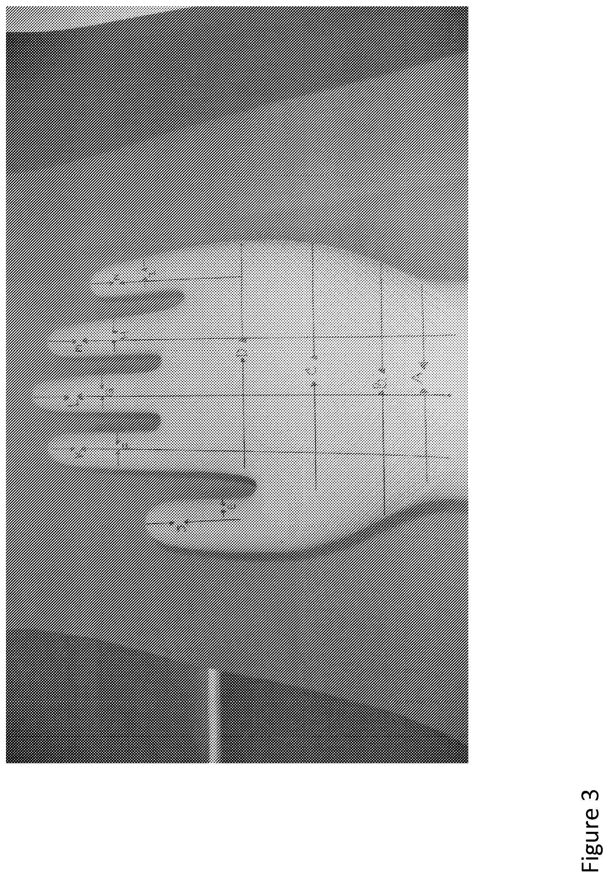

Referring to Figure 3, showing an at least one former that is used to form one "large" sized embodiment of the ambidextrous working glove of the present invention, the area of the former that is textured to impart or transfer a texture to both the inner and outer surfaces of the ambidextrous working glove of the present invention is defined as follows: The width of the area shown by line "A" is 60 mm; the width of the area shown by line "B" is 96 mm; the width of the area shown by line "C" is 83 mm; the width of the area shown by line "D" is 88 mm; the width of the area shown by line "E" is 26 mm; the width of the area shown by line "F" is 17 mm; the width of the area shown by line "G" is 19 mm; the width of the area shown by line "H" is 16 mm; the width of the area shown by line "1" is 17 mm; the length of the area shown by line "J" is 50 mm; the length of the area shown by line "K" is 195 mm; the length of the area shown by line "L" is 218 mm; the length of the area shown by line "M" is 207 mm; and the length of the area shown by line "N" is 95 mm. The width of the former indicated at line "A" is 97 mm; the width of the former indicated at line "B" is 115 mm; the width of the former indicated at line "C" is 122 mm; the width of the former indicated at line "D" is 110 mm; the width of the former indicated at line "E" is 35.5 mm; the width of the former indicated at line "F" is 35 mm; the width of the former indicated at line "G" is 36 mm; the width of the former indicated at line "H" is 34 mm; and the width of the former indicated at line "I" is 30 mm.

In an alternate embodiment, the former that is used to form one "small" sized embodiment of the ambidextrous working glove of the present invention, the area of the former that is textured to impart or transfer a texture to both the inner and outer surfaces of the ambidextrous working glove of the present invention is defined as follows: The width of the area shown by line "A" is 45 mm; the width of the area shown by line "B" is 76 mm; the width of the area shown by line "C" is 73 mm; the width of the area shown by line "D" is 88 mm; the width of the area shown by line "E" is 16 mm; the width of the area shown by line "F" is 14 mm; the width of the area shown by line "G" is 15 mm; the width of the area shown by line "H" is 13 mm; the width of the area shown by line "I" is 13 mm; the length of the area shown by line "J" is 45 mm; the length of the area shown by line "K" is 172 mm; the length of the area shown by line "L" is 184 mm; the length of the area shown by line "M" is 172 mm; and the length of the area shown by line "N" is 85 mm. The width of the former indicated at line "A" is 82.5 mm; the width of the former indicated at line "B" is 95.5 mm; the width of the former indicated at line "C" is 106 mm; the width of the former indicated at line "D" is 88.5 mm; the width of the former indicated at line "E" is 29 mm; the width of the former indicated at line "F" is 29 mm; the width of the former indicated at line "G" is 31 mm; the width of the former indicated at line "H" is 30 mm; and the width of the former indicated at line "I" is 29 mm.

In an alternate embodiment, the former that is used to form one "medium" sized embodiment of the ambidextrous working glove of the present invention, the area of the former that is textured to impart or transfer a texture to both the inner and outer surfaces of the ambidextrous working glove of the present invention is defined as follows: The width of the area shown by line "A" is 50 mm; the width of the area shown by line "B" is 86 mm; the width of the area shown by line "C" is 74 mm; the width of the area shown by line "D" is 79 mm; the width of the area shown by line "E" is 20 mm; the width of the area shown by line "F" is 16 mm; the width of the area shown by line "G" is 18 mm; the width of the area shown by line "H" is 15 mm; the width of the area shown by line "I' is 14 mm; the length of the area shown by line "J" is 46 mm; the length of the area shown by line "K" is 182 mm; the length of the area shown by line "L" is 195 mm; the length of the area shown by line "M" is 186 mm; and the length of the area shown by line "N" is 95 mm. The width of the former indicated at line "A" is 89 mm; the width of the former indicated at line "B" is 105 mm; the width of the former indicated at line "C" is 115 mm; the width of the former indicated at line "D" is 100 mm; the width of the former indicated at line "E" is 33 mm; the width of the former indicated at line "F" is 32 mm; the width of the former indicated at line "G" is 32.5 mm; the width of the former indicated at line "H" is 30 mm; and the width of the former indicated at line "I" is 27.5 mm.

In an alternate embodiment, the former that is used to form one "extra large" or "XL" sized embodiment of the ambidextrous working glove of the present invention, the area of the former that is textured to impart or transfer a texture to both the inner and outer surfaces of the ambidextrous working glove of the present invention is defined as follows: The width of the area shown by line "A" is 66 mm; the width of the area shown by line "B" is 92 mm; the width of the area shown by line "C" is 90 mm; the width of the area shown by line "D" is 95 mm; the width of the area shown by line "E" is 26 mm; the width of the area shown by line "F" is 17 mm; the width of the area shown by line "G" is 17 mm; the width of the area shown by line "H" is 17 mm; the width of the area shown by line "I" is 16 mm; the length of the area shown by line "J" is 55 mm; the length of the area shown by line "K" is 208 mm; the length of the area shown by line "L" is 220 mm; the length of the area shown by line "M" is 208 mm; and the length of the area shown by line "N" is 105 mm. The width of the former indicated at line "A" is 101 mm; the width of the former indicated at line "B" is 115 mm; the width of the former indicated at line "C" is 134 mm; the width of the former indicated at line "D" is 116 mm; the width of the former indicated at line "E" is 37.5 mm; the width of the former indicated at line "F" is 38 mm; the width of the former indicated at line "G" is 37.5 mm; the width of the former indicated at line "H" is 35 mm; and the width of the former indicated at line "I" is 31.5 mm.

In an alternate embodiment, the former that is used to form one "extra extra large" or "XXL" sized embodiment of the ambidextrous working glove of the present invention, the area of the former that is textured to impart or transfer a texture to both the inner and outer surfaces of the ambidextrous working glove of the present invention is defined as follows: The width of the area shown by line "A" is 67 mm; the width of the area shown by line "B" is 101 mm; the width of the area shown by line "C" is 108 mm; the width of the area shown by line "D" is 103 mm; the width of the area shown by line "E" is 23 mm; the width of the area shown by line "F" is 22 mm; the width of the area shown by line "G" is 21 mm; the width of the area shown by line "H" is 20 mm; the width of the area shown by line "I" is 19 mm; the length of the area shown by line "J" is 54 mm; the length of the area shown by line "K" is 207 mm; the length of the area shown by line "L" is 222 mm; the length of the area shown by line "M" is 211 mm; and the length of the area shown by line "N" is 100 mm. The width of the former indicated at line "A" is 109 mm; the width of the former indicated at line "B" is 119 mm; the width of the former indicated at line "C" is 140 mm; the width of the former indicated at line "D" is 126 mm; the width of the former indicated at line "E" is 40 mm; the width of the former indicated at line "F" is 40 mm; the width of the former indicated at line "G" is 41 mm; the width of the former indicated at line "H" is 38 mm; and the width of the former indicated at line "I" is 38 mm.

In an alternate embodiment, the former that is used to form one "extra extra extra large" or "XXXL" sized embodiment of the ambidextrous working glove of the present invention, the area of the former that is textured to impart or transfer a texture to both the inner and outer surfaces of the ambidextrous working glove of the present invention is defined as follows: The width of the area shown by line "A" is 62 mm; the width of the area shown by line "B" is 103 mm; the width of the area shown by line "C" is 112 mm; the width of the area shown by line "D" is 110 mm; the width of the area shown by line "E" is 24 mm; the width of the area shown by line "F" is 20 mm; the width of the area shown by line "G" is 20 mm; the width of the area shown by line "H" is 20 mm; the width of the area shown by line "I" is 18 mm; the length of the area shown by line "J" is 54 mm; the length of the area shown by line "K" is 205 mm; the length of the area shown by line "L" is 224 mm; the length of the area shown by line "M" is 212 mm; and the length of the area shown by line "N" is 105 mm. The width of the former indicated at line "A" is 124 mm; the width of the former indicated at line "B" is 144 mm; the width of the former indicated at line "C" is 156 mm; the width of the former indicated at line "D" is 136 mm; the width of the former indicated at line "E" is 40.5 mm; the width of the former indicated at line "F" is 39 mm; the width of the former indicated at line "G" is 40 mm; the width of the former indicated at line "H" is 37.5 mm; and the width of the former indicated at line "I" is 34 mm.

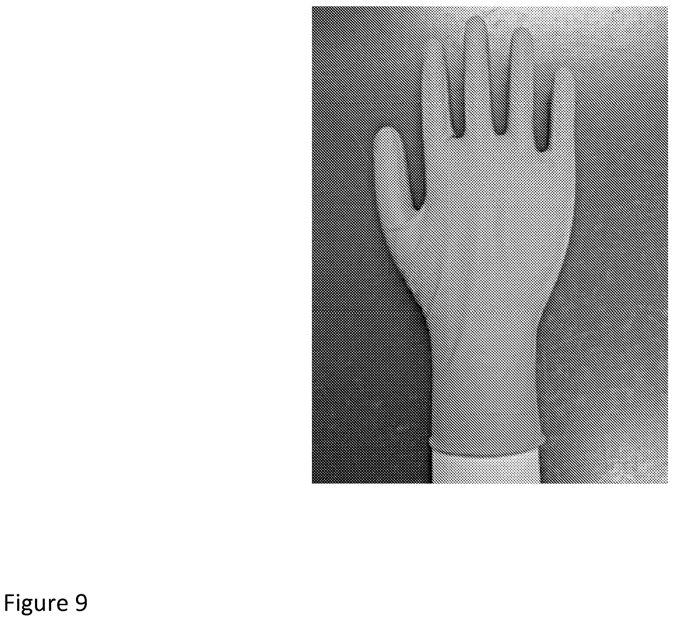

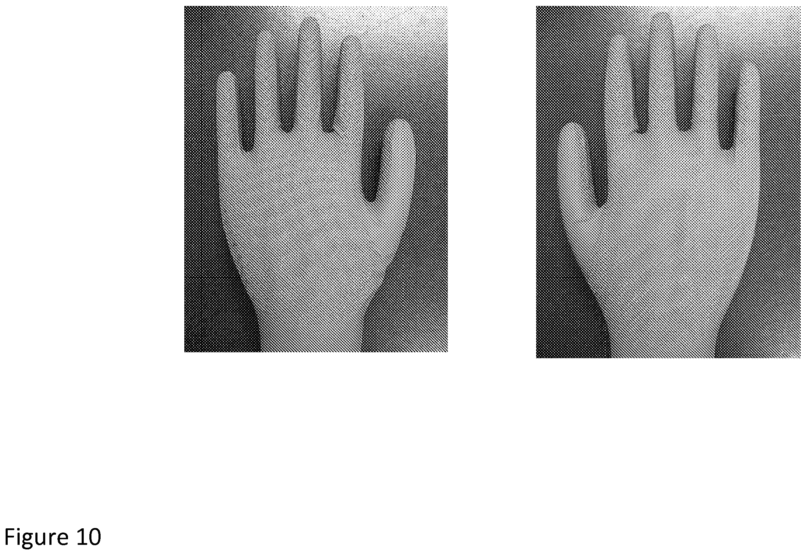

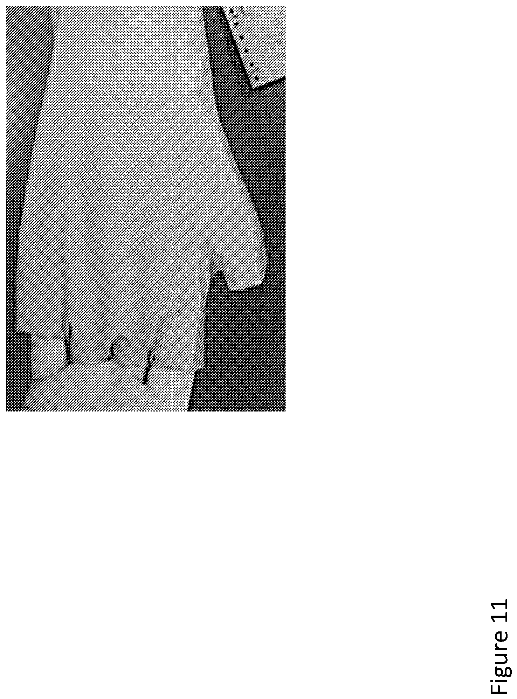

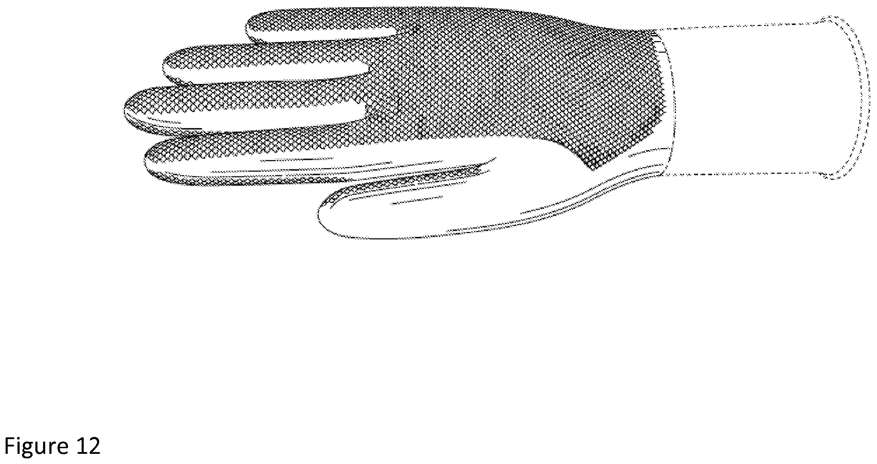

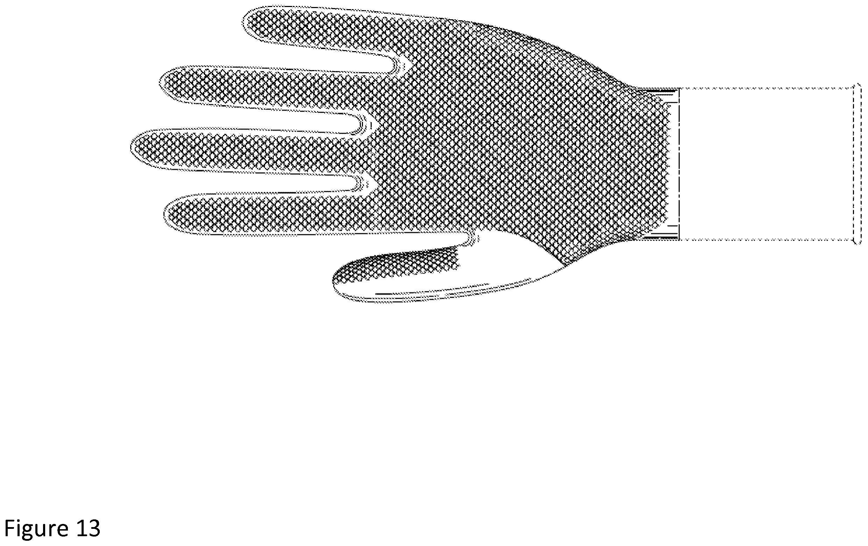

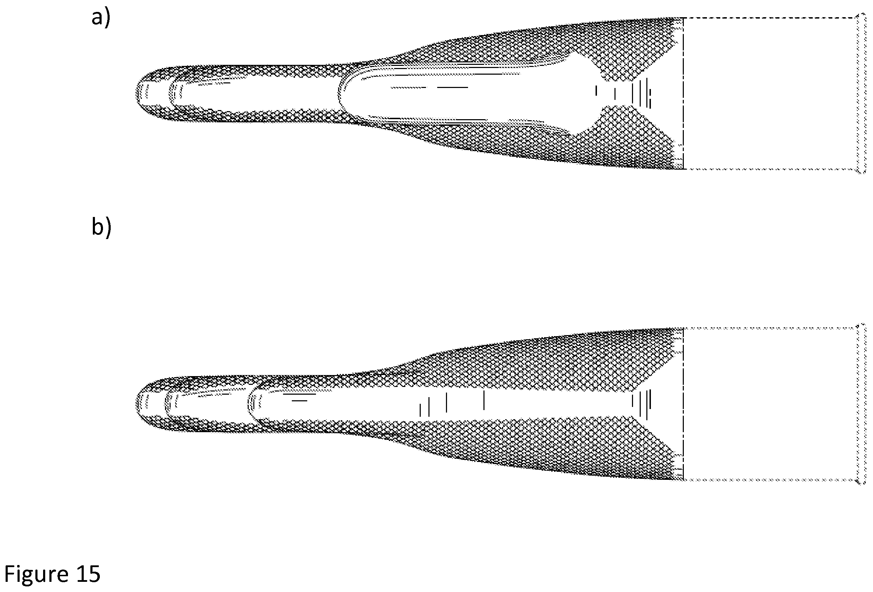

The textured inner and outer surfaces of one embodiment of the ambidextrous working glove of the present invention can be greater detail in Figures 9 to 11. A graphical representation of the fish-scale textured outer surface of an ambidextrous working glove of the present invention is shown in Figures 12 to 16.

In one embodiment, the ambidextrous working glove of the present invention has a measured thickness in a non-textured area selected from the range of thicknesses spanning from about 6mil to about 10 mil (approximately 0.15 to 0.25mm).

In one embodiment, the ambidextrous working glove of the present invention has a weight of about 20 g. In an alternate embodiment, the ambidextrous working glove of the present invention has a weight of about 19 g. In an alternate embodiment, the ambidextrous working glove of the present invention has a weight of about 18 g. In an alternate embodiment, the ambidextrous working glove of the present invention has a weight of about 17 g. In an alternate embodiment, the ambidextrous working glove of the present invention has a weight of about 16 g. In an alternate embodiment, the ambidextrous working glove of the present invention has a weight of about 15 g. In an alternate embodiment, the ambidextrous working glove of the present invention has a weight of about 14 g. In an alternate embodiment, the ambidextrous working glove of the present invention has a weight of about 13 g. In an alternate embodiment, the ambidextrous working glove of the present invention has a weight of about 12 g. In an alternate embodiment, the ambidextrous working glove of the present invention has a weight of about 11 g. In an alternate embodiment, the ambidextrous working glove of the present invention has a weight of about 10 g.

In one embodiment, the ambidextrous working glove of the present invention complies with European Standard EN420:2003 and A 1:2009 clause 5 sizing and dexterity regulations.

In one embodiment, the ambidextrous working glove of the present invention complies with European Standard BS EN374:2003 chemical and micro-organism protection regulations.

In one embodiment, second polymer solution is a solution that allows the ambidextrous working glove of the present invention to slide over a wearer's hand while the glove is being donned. In one embodiment, the second polymer solution is a polyurethane solution.

In one embodiment, the second polymer solution is a solution comprising polyurethane (10% v/v final concentration), and 12% ammonia (2% final concentration) in water.

In one embodiment, the second polymer solution forms a cholorinated film on the inner surface of the ambidextrous working glove of the present invention. In one embodiment, the second polymer solution forms a cholorinated film on the inner surface of the ambidextrous working glove of the present invention according to the methods described in WO2010023634. In one embodiment, the second polymer solution is a polyisoprene solution. In one embodiment, the polyisoprene solution is the polyisoprene solution described in EP2381100 A1.

The present invention is further illustrated, but not limited by, the following examples.

### EXAMPLES

### Example 1: Testing Embodiments of the Ambidextrous Working Glove of the Present Invention for Resistance to Permeation by Chemicals According to BS EN 374-3:2003

Samples of powder-free 8 mil black, 10 mil black and 8 mil blue nitrile gloves were tested in accordance with BS EN 374:2003 part 3. The results are shown in the tables below. The permeation performance levels are defined as follows: Level 1 is defined as an observed measured breakthrough time of greater than 10 minutes. Level 2 is defined as an observed measured breakthrough time of greater than 30 minutes. Level 3 is defined as an observed measured breakthrough time of greater than 60 minutes. Level 4 is defined as an observed measured breakthrough time of greater than 120 minutes. Level 5 is defined as an observed measured breakthrough time of greater than 240 minutes. Level 6 is defined as an observed measured breakthrough time of greater than 480 minutes.

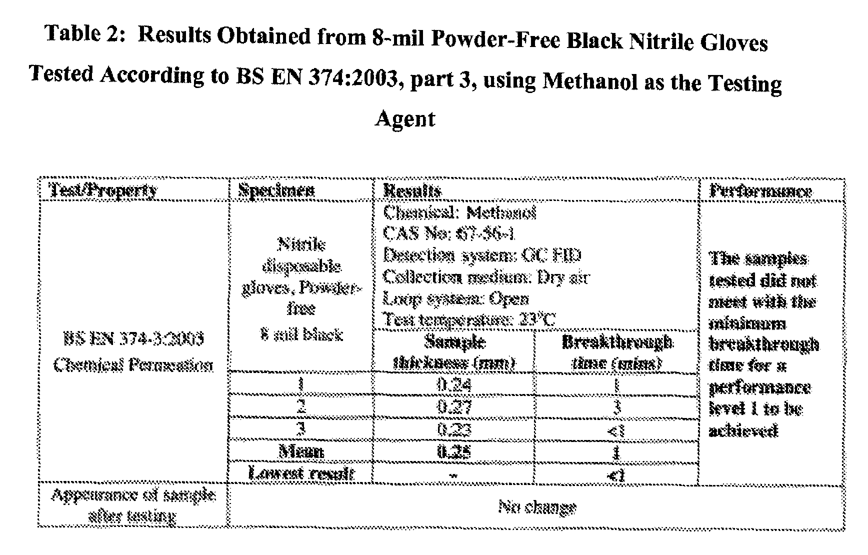

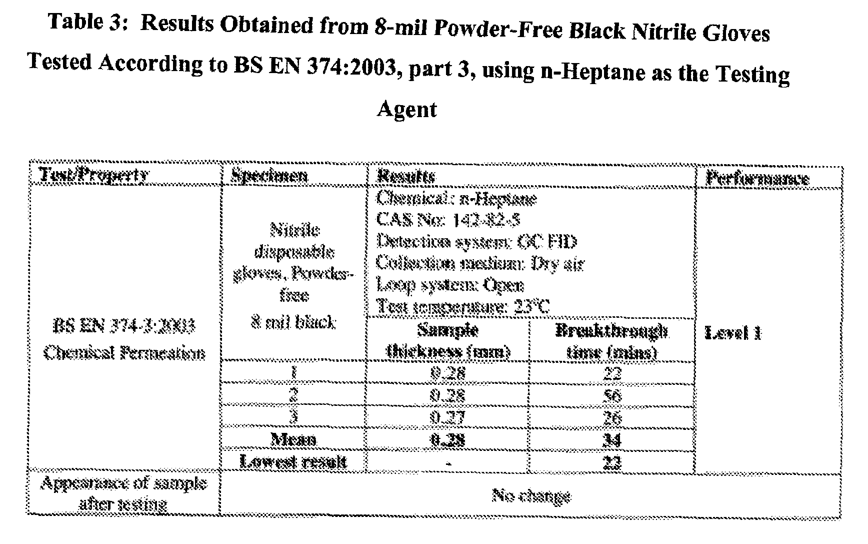

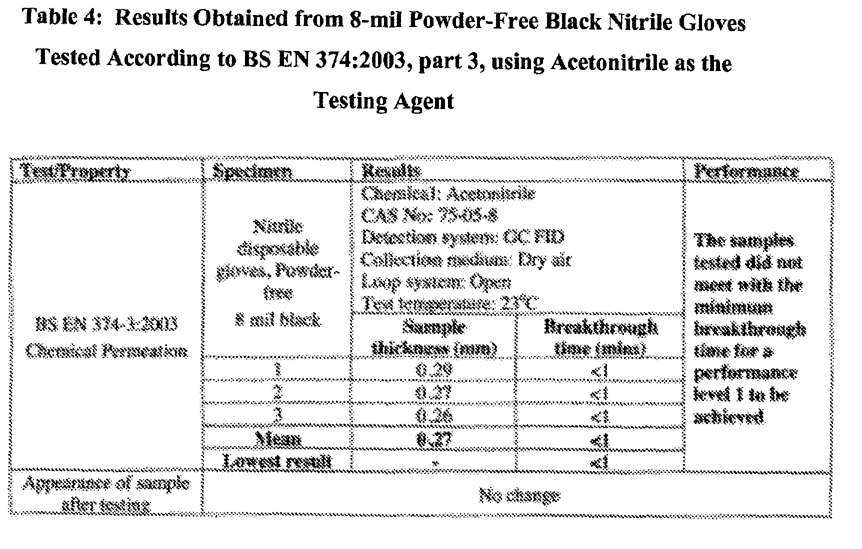

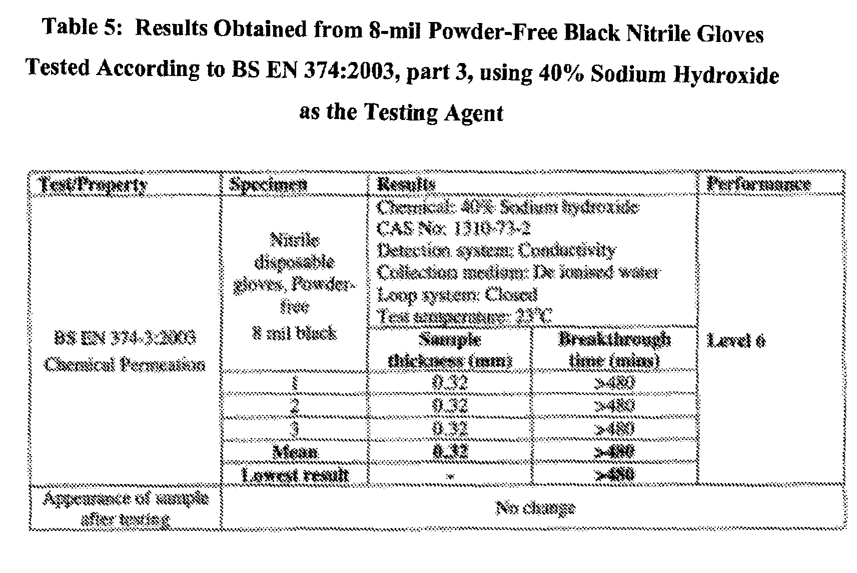

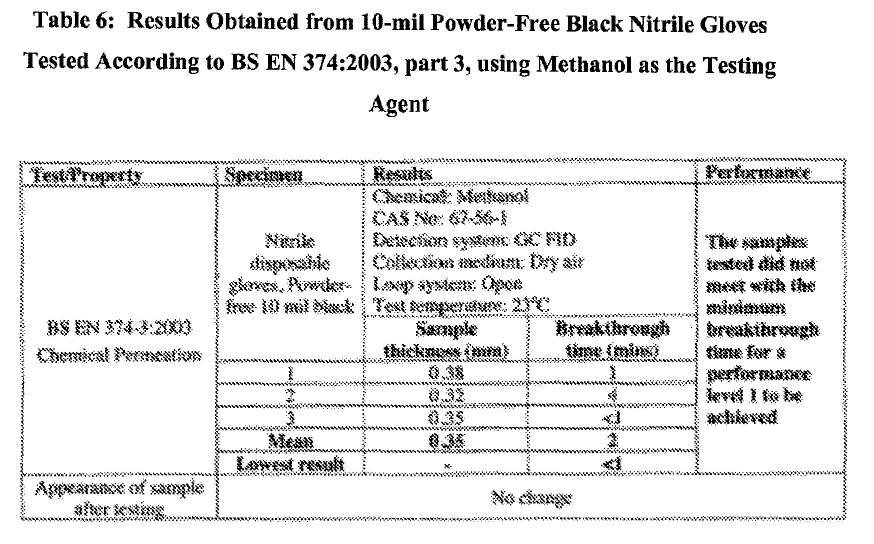

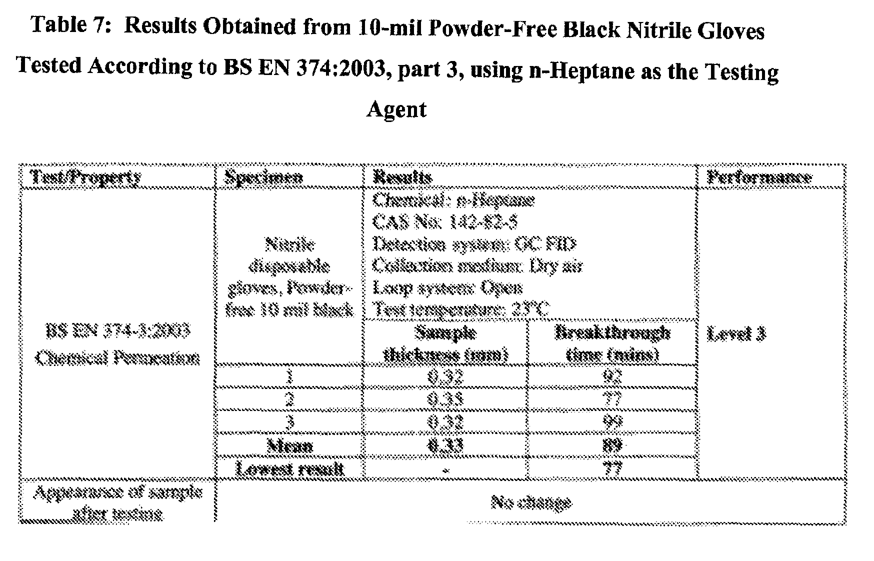

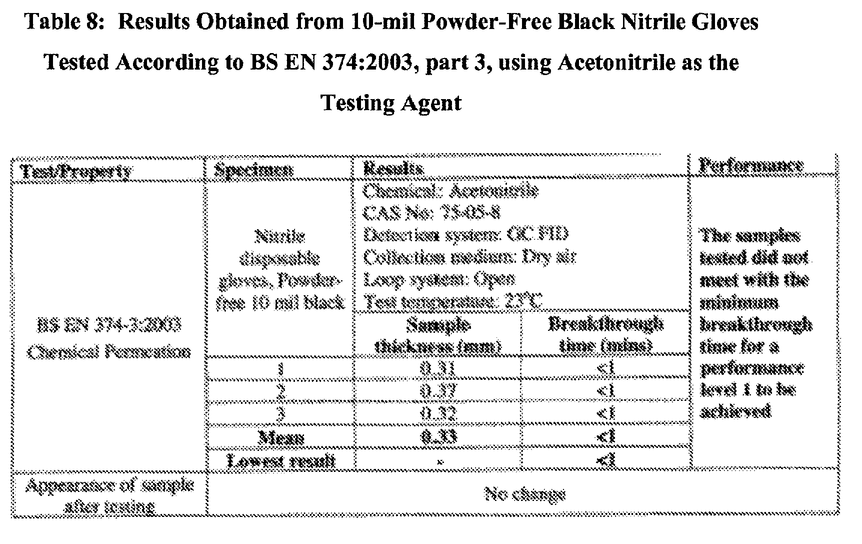

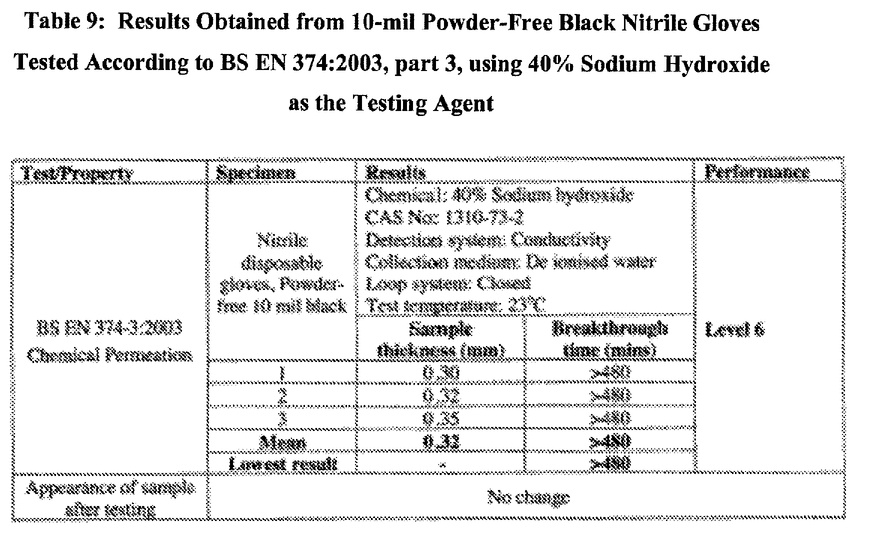

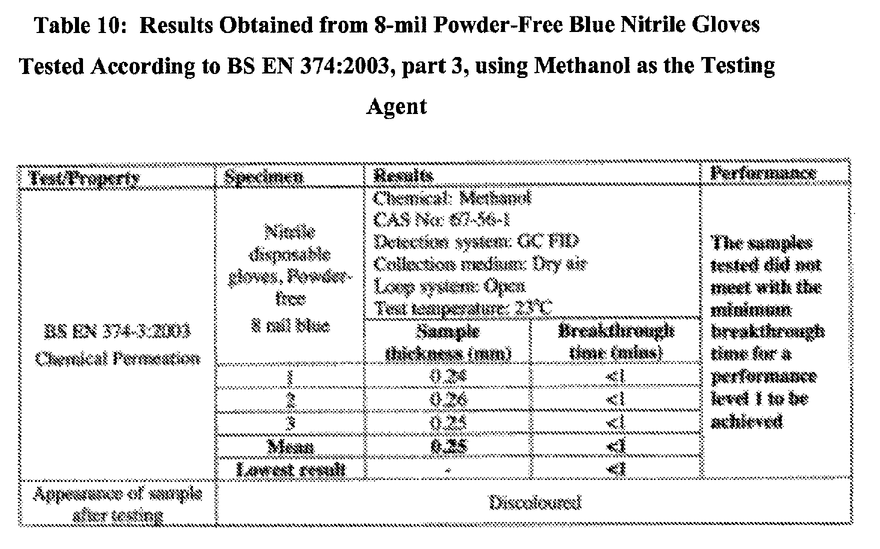

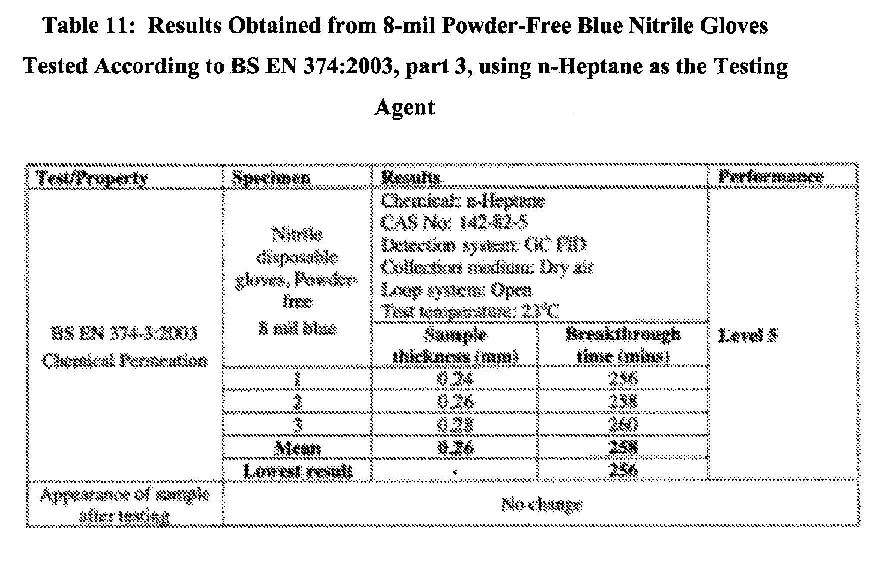

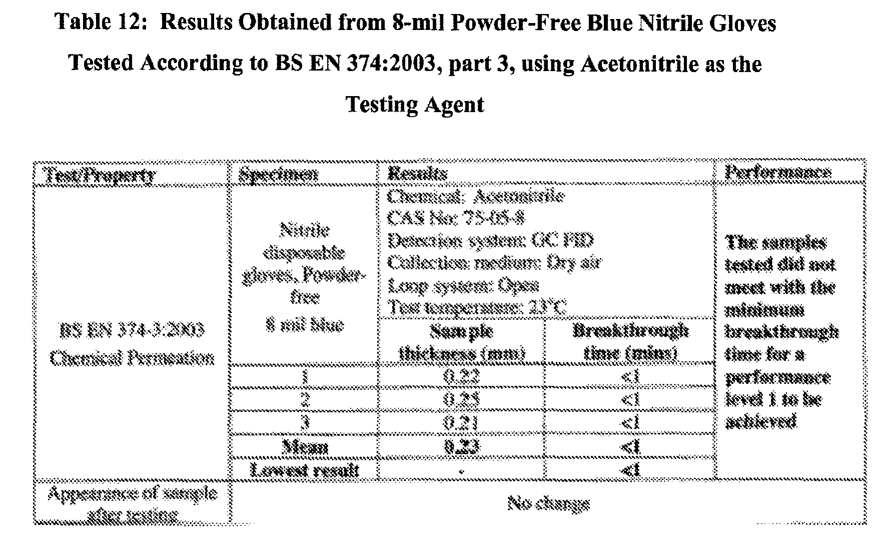

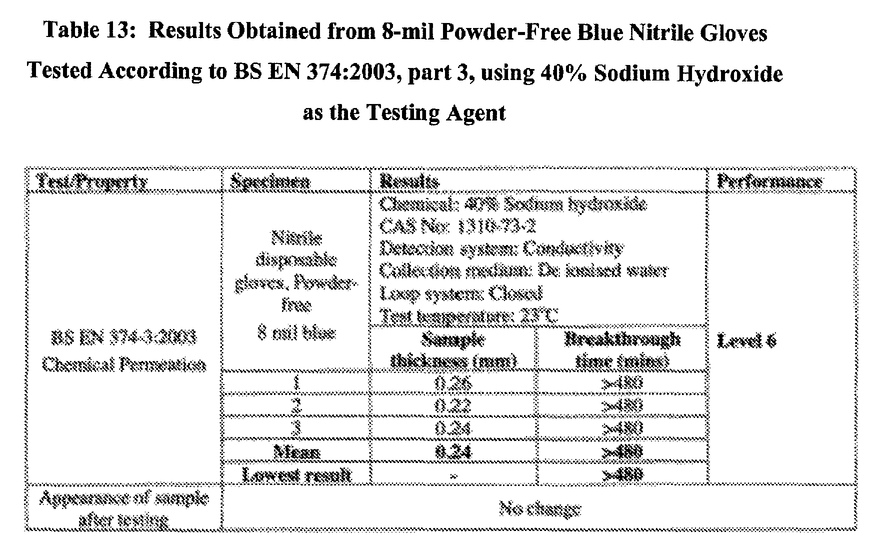

### Example 2: Testing Embodiments of the Ambidextrous Working Glove of the Present Invention for Sizing and Dexterity According to EN 420:2003 + A1:2009 Clause 5

Samples of powder-free 8 mil black, 10 mil black and 8 mil blue nitrile gloves were tested in accordance with EN 420:2003 + A1 :2009 Clause 5. The results are shown in the tables below. The permeation performance levels are defined as follows: For sizing, the minimum size for a size 6 glove is 220 mm; the minimum size for a size 7 glove is 230 mm; the minimum size for a size 8 glove is 240 mm; the minimum size for a size 9 glove is 250 mm; the minimum size for a size 10 glove is 260 mm; the minimum size for a size 11 glove is 270 mm. For dexterity, level 1 is defined as a wearer picking up an 11mm diameter pin; level 2 is defined as a wearer picking up a 9.5mm diameter pin; level 3 is defined as a wearer picking up an 8mm diameter pin; level 4 is defined as a wearer picking up a 6mm diameter pin; level 5 is defined as a wearer picking up a 5mm diameter pin.

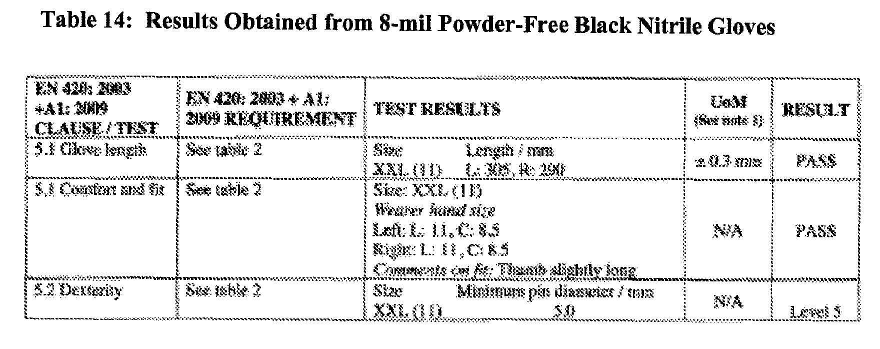

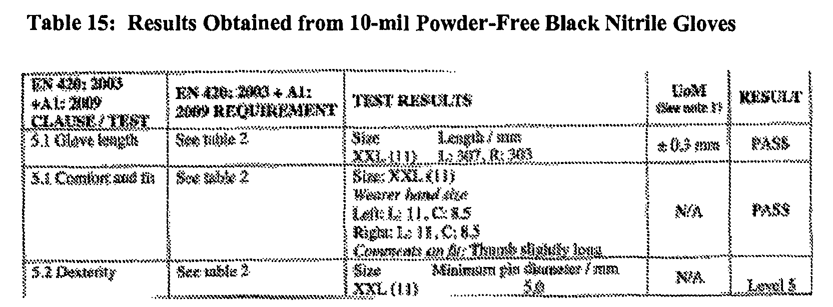

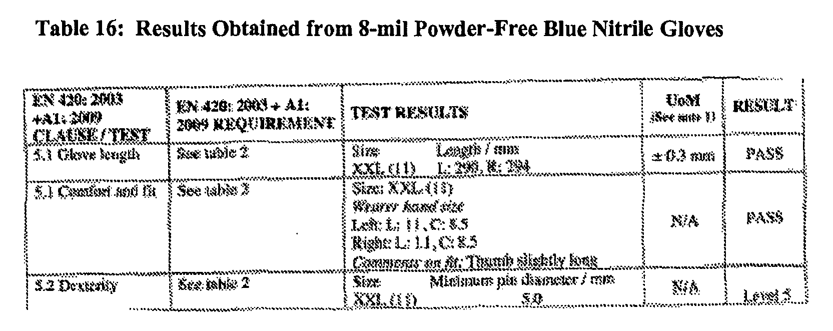

Although the various aspects of the invention have been illustrated above by reference to examples and preferred embodiments, it will be appreciated that the scope of the invention is defined not by the foregoing description but by the following claims properly construed under principles of patent law.

## Claims

1. A method for making an ambidextrous working glove made of an outer layer of first polymer material and an inner layer of second polymer material, said glove having an external moulded fishscale-textured pattern on the outer layer which provides grip on both sides of the glove in at least part of the area of each of the palm, finger and thumb regions, **characterised in that** the reverse of said external pattern in each said area is present on the inside surface of the inner layer of the glove for contact with a wearer's hand, said method comprising the steps of:
a. providing a solution of said first polymer;
b. providing a coagulant solution;
c. providing a solution of said second polymer;
d. providing at least one former having a fish scale-textured surface and dipping the at least one former into the coagulant solution to coat the at least one former with coagulant;
e. removing the at least one former from the coagulant solution and drying the coagulant coating on the at least one former;
f. dipping the at least one former coated with coagulant into the first polymer solution, and allowing the first polymer solution to coat the at least one former;
g. removing the at least one former from the first polymer solution and drying the polymer coating on the at least one former, forming a film;
h. washing the film on the at least one former, and dipping the film coated at least one former into the second polymer solution, and allowing the second polymer solution to coat the film; and
i. stripping the glove from the at least one former.

2. A method according to claim 1, in which the textured surface of the former is provided over Y% of the former, where Y is one of the following: 100%; 90%; 80%; 70%; 60%; 50%; 40%; 30%; 20%; 10%,

3. A method according to claim 1 or claim 2, wherein the first polymer solution is a synthetic rubber copolymer.

4. A method according to claim 3, wherein the synthetic rubber copolymer comprises a copolymer of acetonitrile and butadiene.

5. A method according to claim 1 or claim 2, wherein the first polymer solution is latex.

6. A method according to claim 1 or claim 2, wherein the second polymer solution is a polymer solution that facilitates the glove sliding over a wearer's hand while the glove is being donned.

7. A method according to claim 1 or claim 2, wherein the second polymer solution is a polyurethane.

8. A method according to any of claims 1 to 7, wherein the thickness of the glove in a non-textured area is in the range of thicknesses from about 6mil to about 10 mil (approximately 0.15 mm to about 0.25 mm).

9. A method according to any of claims 1 to 8, having an approximate weight of one of the following: 10g; 11 g; 12g; 13g; 14g; 15g; 16g; 17g; 18g; 19g; 20g.

10. A method according to any of claims 1 to 8, which includes areas where the external pattern is absent, the thickness of the textured areas being X%, greater than the thickness of the polymer material in the areas where the gripping pattern is absent, and in which X is one of the following: 10%; 20%; 30%; 40%; 50%.

11. A method according to any of claims 1 to 7, which complies with at least one requirement from the group consisting of FFDCA requirements for food handling, European Standard EN374-3, European Standard EN388:2003, European Standard EN374-2, European Standard EN420:2003, European Standard EN 1186:2002, and European Standard EN421:2010.

12. An ambidextrous working glove obtainable by the method of any of claims 1-11.

## Patentansprüche

1. Verfahren zur Herstellung eines beidhändigen Arbeitshandschuhs, der aus einer Außenschicht aus einem ersten Polymermaterial und einer Innenschicht aus einem zweiten Polymermaterial hergestellt ist, wobei der Handschuh ein äußeres geformtes fischschuppentexturiertes Muster auf der Außenschicht aufweist, das auf beiden Seiten des Handschuhs auf zumindest einem Teil des Bereichs von jedem von Handflächen-, Finger- und Daumenregion Griffigkeit verleiht, **dadurch gekennzeichnet, dass** die Kehrseite des äußeren Musters in jedem der Bereiche an der Innenfläche der Innenschicht des Handschuhs zur Berührung der Hand eines Trägers vorhanden ist, wobei das Verfahren die folgenden Schritte umfasst:
a. Bereitstellen einer Lösung des ersten Polymers;
b. Bereitstellen einer Koagulationsmittellösung;
c. Bereitstellen einer Lösung des zweiten Polymers;
d. Bereitstellen mindestens eines Formers mit einer fischschuppentexturierten Oberfläche und Eintauchen des mindestens einen Formers in die Koagulationsmittellösung, um den mindestens einen Former mit Koagulationsmittel zu beschichten;
e. Entfernen des mindestens einen Formers aus der Koagulationsmittellösung und Trocknen der Koagulationsmittelbeschichtung auf dem mindestens einen Former;
f. Eintauchen des mindestens einen mit Koagulationsmittel beschichteten Formers in die Lösung des ersten Polymers und Ermöglichen, dass die erste Polymerlösung den mindestens einen Former beschichtet;
g. Entfernen des mindestens einen Formers aus der Lösung des ersten Polymers und Trocknen der Polymerbeschichtung auf dem mindestens einen Former, wodurch sich ein Film bildet;
h. Waschen des Films auf dem mindestens einen Former und Eintauchen des mit dem Film beschichteten mindestens einen Formers in die Lösung des zweiten Polymers und Ermöglichen, dass die Lösung des zweiten Polymers den Film beschichtet; und
i. Abstreifen des Handschuhs von dem mindestens einen Former.

2. Verfahren nach Anspruch 1, wobei die texturierte Oberfläche des Formers über Y % des Formers bereitgestellt wird, wobei Y eines der Folgenden ist: 100 %; 90 %; 80 %; 70 %; 60 %; 50 %; 40 %; 30 %; 20 %; 10 %.

3. Verfahren nach Anspruch 1 oder Anspruch 2, wobei die Lösung des ersten Polymers ein synthetisches Kautschukcopolymer ist.

4. Verfahren nach Anspruch 3, wobei das synthetische Kautschukcopolymer ein Copolymer aus Acetonitril und Butadien umfasst.

5. Verfahren nach Anspruch 1 oder Anspruch 2, wobei die Lösung des ersten Polymers Latex ist.

6. Verfahren nach Anspruch 1 oder Anspruch 2, wobei die Lösung des zweiten Polymers eine Polymerlösung ist, die das Gleiten des Handschuhs über die Hand eines Trägers erleichtert, während der Handschuh angezogen wird.

7. Verfahren nach Anspruch 1 oder Anspruch 2, wobei die Lösung des zweiten Polymers ein Polyurethan ist.

8. Verfahren nach einem der Ansprüche 1 bis 7, wobei die Dicke des Handschuhs in einem nichttexturierten Bereich im Dickenbereich von etwa 6 mil bis etwa 10 mil (ungefähr 0,15 mm bis etwa 0,25 mm) liegt.

9. Verfahren nach einem der Ansprüche 1 bis 8, das ein ungefähres Gewicht von einem der Folgenden aufweist: 10 g; 11 g; 12 g; 13 g; 14 g; 15 g; 16 g; 17 g; 18 g; 19 g; 20 g.

10. Verfahren nach einem der Ansprüche 1 bis 8, das Bereiche aufweist, in denen das äußere Muster fehlt, wobei die Dicke der texturierten Bereiche X % größer ist als die Dicke des Polymermaterials in den Bereichen, in denen das Griffigkeitsmuster fehlt, und wobei X eines der Folgenden ist: 10 %; 20 %; 30 %; 40 %; 50 %.

11. Verfahren nach einem der Ansprüche 1 bis 7, das mindestens einer Anforderung aus der Gruppe bestehend aus den FFDCA-Anforderungen für den Lebensmittelbereich, der Europäischen Norm EN374-3, der Europäischen Norm EN388:2003, der Europäischen Norm EN374-2, der Europäischen Norm EN420:2003, der Europäischen Norm EN 1186:2002 und der Europäischen Norm EN421:2010 entspricht.

12. Beidhändiger Arbeitshandschuh, der durch das Verfahren nach einem der Ansprüche 1-11 erhältlich ist.

## Revendications

1. Procédé de fabrication d'un gant de travail ambidextre composé d'une couche extérieure de premier matériau de polymère et d'une couche intérieure de second matériau de polymère, ledit gant ayant un motif moulé externe texturé en écaille de poisson sur la couche extérieure qui fournit une préhension des deux côtés du gant dans au moins une partie de la zone de chacune parmi les zones de paume, de doigt et de pouce, **caractérisé en ce que** l'envers dudit motif extérieur dans chaque dite zone est présent sur la surface intérieure de la couche intérieure du gant pour un contact avec la main d'un porteur, ledit procédé comprenant les étapes de :
a. fourniture d'une solution dudit premier polymère ;
b. fournir une solution de coagulant ;
c. fourniture d'une solution dudit deuxième polymère ;
d. fourniture d'au moins un gabarit possédant une surface texturée selon des écailles de poisson et trempage de l'au moins un gabarit dans la solution de coagulant pour revêtir l'au moins un gabarit avec un coagulant ;
e. élimination de l'au moins un gabarit de la solution de coagulant et séchage du revêtement de coagulant sur l'au moins un gabarit ;
f. trempage de l'au moins un gabarit revêtu avec un coagulant dans la première solution de polymère et le fait de laisser la première solution de polymère revêtir l'au moins un gabarit ;
g. retrait de l'au moins un gabarit de la première solution de polymère et séchage du revêtement de polymère sur l'au moins un gabarit, formation d'un film ;
h. lavage du film sur l'au moins un gabarit, et trempage de l'au moins un gabarit revêtu par un film dans la deuxième solution de polymère, et le fait de laisser la deuxième solution de polymère revêtir le film ; et
i. dépouillement du gant de l'au moins un gabarit.

2. Procédé selon la revendication 1, dans lequel la surface texturée du gabarit est fournie sur Y % du gabarit, où Y est l'un parmi les suivants: 100 % ; 90 % ; 80 % ; 70 % ; 60 % ; 50 % ; 40 % ; 30 % ; 20 % ; 10 %.

3. Procédé selon la revendication 1 ou la revendication 2, dans lequel la première solution de polymère est un copolymère de caoutchouc synthétique.

4. Procédé selon la revendication 3, dans lequel le copolymère de caoutchouc synthétique comprend un copolymère d'acétonitrile et de butadiène.

5. Procédé selon la revendication 1 ou la revendication 2, dans lequel la première solution de polymère est un latex.

6. Procédé selon la revendication 1 ou la revendication 2, dans lequel la seconde solution de polymère est une solution de polymère qui facilite le glissement du gant sur la main du porteur pendant que le gant est enfilé.

7. Procédé selon la revendication 1 ou la revendication 2, dans lequel la seconde solution de polymère est un polyuréthane.

8. Procédé selon l'une quelconque des revendications 1 à 7, dans lequel l'épaisseur du gant dans une zone non texturée est dans la plage d'épaisseurs d'environ 6 mil à environ 10 mil (environ 0,15 mm à environ 0,25 mm).

9. Procédé selon l'une quelconque des revendications 1 à 8, ayant un poids approximatif parmi les suivants : 10 g ; 11 g ; 12 g ; 13 g ; 14 g ; 15 g ; 16 g ; 17 g ; 18 g ; 19 g ; 20 g.

10. Procédé selon l'une quelconque des revendications 1 à 8, qui comprend des zones où le motif externe est absent, l'épaisseur des zones texturées étant X %, supérieure à l'épaisseur du matériau de polymère dans les zones où le motif de préhension est absent, et dans lequel X est l'un parmi les suivants: 10 % ; 20 % ; 30 % ; 40 % ; 50 %.

11. Procédé selon l'une quelconque des revendications 1 à 7, qui satisfait à au moins une exigence du groupe constitué par les exigences FFDCA pour la manipulation des aliments, la norme européenne EN374-3, la norme européenne EN388:2003, la norme européenne EN374-2, la norme européenne EN420:2003, la norme européenne EN1186:2002, et la norme européenne EN421:2010.

12. Gant de travail ambidextre pouvant être obtenu par le procédé selon l'une quelconque des revendications 1 à 11.
